(19) Europäisches Patentamt
European Patent Office
Office européen des brevets

(11) **EP 2 821 126 A1**

(12) **EUROPEAN PATENT APPLICATION**
published in accordance with Art. 153(4) EPC

(43) Date of publication:
**07.01.2015 Bulletin 2015/02**

(21) Application number: **13754242.9**

(22) Date of filing: **28.02.2013**

(51) Int Cl.:
**B01D 69/12** (2006.01)　　　**B01D 69/02** (2006.01)
**B01D 69/10** (2006.01)　　　**B01D 71/48** (2006.01)

(86) International application number:
**PCT/JP2013/055526**

(87) International publication number:
**WO 2013/129610 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.02.2012 JP 2012042964
26.09.2012 JP 2012212629**

(71) Applicant: **Toray Industries, Inc.
Tokyo 103-8666 (JP)**

(72) Inventors:
• **SHIMURA, Harutoki**
  **Otsu-shi, Shiga 520-8558 (JP)**
• **OKABE, Jun**
  **Otsu-shi, Shiga 520-8558 (JP)**
• **TAKAYA, Kiyohiko**
  **Otsu-shi, Shiga 520-8558 (JP)**
• **KIMURA, Masahiro**
  **Otsu-shi, Shiga 520-8558 (JP)**

(74) Representative: **Hoefer & Partner
Pilgersheimer Straße 20
81543 München (DE)**

(54) **COMPLEX SEMI-PERMEABLE MEMBRANE**

(57)　To provide a composite semipermeable membrane capable of maintaining high removal performance even after its supporting membrane has come into contact with an aqueous solution high in salt concentration. A composite semipermeable membrane including: a supporting membrane which includes a substrate and a porous supporting layer; and a separation functional layer provided on the porous supporting layer, in which a strength to peel the porous supporting layer away from the substrate is 1.1 N/25mm or higher.

EP 2 821 126 A1

**Description**

TECHNICAL FIELD

The present invention relates to a composite semipermeable membrane useful for selective separation of a liquid mixture. The composite semipermeable membrane obtained by the present invention can be used suitably for desalination of seawater, brackish water or the like.

BACKGROUND ART

With regard to mixture separation, there have been various techniques for removing substances (e.g. salts) dissolved in a solvent (e.g. water). Among all those techniques, recently utilization of membrane separation techniques has been expanded as a process for saving energy and resources. Examples of a membrane usable in membrane separation techniques include a microfiltration membrane, an ultrafiltration membrane, a nanofiltration membrane and a reverse osmosis membrane. These membranes have been used in the case of obtaining drink water e.g. from sea water, brackish water or harmful substance-containing water, and further in producing industrial ultrapure water, performing waste treatment, recovering valuables, and so on.

Most of commercially available reverse osmosis membranes and nanofiltration membranes are composite semipermeable membranes, which are divided into two types: one type has a gel layer and an active layer including a cross-linked polymer on a supporting membrane; and the other type has an active layer formed by polycondensing monomers on a supporting membrane. Above all, a composite semipermeable membrane which is obtained by coating a supporting membrane with a separation functional layer including cross-linked polyamide obtained by polycondensation reaction between a multifunctional amine and a multifunctional acyl halide have been widely used as a separation membrane having high permeability and high selective separability (Patent Documents 1 and 2).

BACKGROUND ART DOCUMENT

PATENT DOCUMENT

        Patent Document 1: JP-A-55-14706
        Patent Document 2: JP-A-5-76740

SUMMARY OF THE INVENTION

PROBLEMS THAT THE INVENTION IS TO SOLVE

In the case of performing separation using a reverse osmosis membrane, operation is generally conducted under conditions that the salt concentration on the feed water side is high and the salt concentration on the permeate side is low. As a result, the salt concentration in the supporting membrane is low. However, there may be cases where invasion of a supporting membrane by an aqueous solution high in salt concentration is caused by some factor, and after that the invading aqueous solution comes into contact with permeate low in salt concentration, thereby degrading removal performance. It is therefore required to produce such a composite semipermeable membrane as not to cause degradation in removal performance even when its supporting membrane is brought into contact with an aqueous solution high in salt concentration.

MEANS FOR SOLVING THE PROBLEMS

In order to attain the foregoing object, the invention adopts the following constitutions.

        (1) A composite semipermeable membrane including: a supporting membrane which includes a substrate and a porous supporting layer; and a separation functional layer provided on the porous supporting layer,
        in which the porous supporting layer includes a first layer on a substrate side and a second layer formed on the first layer, and has a peel strength of 1.1 N/25mm or higher, which is an average value of values obtained by 10-times measurement of a maximum value of a peel force when the porous supporting layer is peeled away from the substrate using a tensile testing machine TENSILON at a temperature of 25°C, at a peel speed of 10 mm/min and in a peel direction of 180°.

(2) The composite semipermeable membrane according to (1), in which an interface between the first layer and the second layer is continuous in structure.

(3) The composite semipermeable membrane according to (2), in which the porous supporting layer is formed by applying concurrently a polymer solution A for forming the first layer on the substrate and a polymer solution B for forming the second layer, followed by bringing into contact with a coagulation bath to cause phase separation.

(4) The composite semipermeable membrane according to (3), in which the polymer solution A and the polymer solution B are different in composition.

(5) The composite semipermeable membrane according to (4), in which a solid concentration a (% by weight) of the polymer solution A and a solid concentration b (% by weight) of the polymer solution B satisfy the following relational expressions: $1.0 < a/b < 2.0$, $15 \leq a \leq 30$ and $12 \leq b \leq 20$.

(6) The composite semipermeable membrane according to any one of (1) to (5), in which the substrate is a long-fiber nonwoven fabric containing polyester as a main component.

## ADVANTAGE OF THE INVENTION

The present invention provides a composite semipermeable membrane capable of maintaining high removal performance even after its supporting membrane has come into contact with an aqueous solution high in salt concentration.

## MODE FOR CARRYING OUT THE INVENTION

### 1. Composite Semipermeable Membrane

The composite semipermeable membrane includes a supporting membrane including a substrate and a porous supporting layer, and a separation functional layer provided on the porous supporting layer. And the composite semipermeable membrane has a strength to peel the porous supporting layer away from the substrate of 1.1 N/25 mm or higher.

### (1-1) Separation Functional Layer

The separation functional layer is a layer burdened with responsibility for a function of separating a solute in the composite semipermeable membrane. Composition and configuration, inclusive of thickness, of the separation functional layer can be adjusted to be suited for the intended use of the composite semipermeable membrane.

### (Separation Functional Layer Made of Polyamide)

The separation functional layer may contain e.g. polyamide as a main component. The polyamide to form the separation functional layer can be produced by interfacial polycondensation reaction between multifunctional amine and multifunctional acyl halide. Herein, it is preferable that at least either the multifunctional amine or the multifunctional aryl halide includes a trifunctional or higher compound.

Additionally, the expression of "X contains Y as a main component" in this specification means that Y constitutes at least 50% by weight of X, and includes a case where X is substantially constituted of only Y.

In order to ensure sufficient separation performance and sufficient amount of permeate, the separation functional polyamide layer generally has a thickness in a range of 0.01 $\mu$m to 1 $\mu$m, preferably in a range of 0.1 $\mu$m to 0.5 $\mu$m. The term "multifunctional amine" as used herein refers to an amine having at least two primary amino groups and/or secondary amino groups in one molecule thereof, provided that at least one among these amino groups is a primary amino group. Examples of such an amine include: aromatic multifunctional amines having a structure that two amino groups are bonded to a benzene ring at any of ortho-, meta- and para- positions, such as phenylenediamine, xylylenediamine, 1,3,5-triaminobenzene, 1,2,4-triaminobenzene, 3,5-diaminobenzoic acid, 3-aminobenzylamine and 4-aminobenzylamine; aliphatic amines such as ethylenediamine and propylenediamine; and alicyclic multifunctional amines such as 1,2-diaminocyclohexane, 1,4-diaminocyclohexane, 4-aminopiperidine and 4-aminoethylpiperazine. Of these amines, aromatic multifunctional amines having 2 to 4 primary amino groups and/or secondary amino groups in one molecule thereof are preferred in view of selective separability, permeability and heat resistance of a membrane. As the foregoing aromatic multifunctional amines, m-phenylenediamine, p-phenylenediamine and 1,3,5-triaminobenzene are suitably used. In particular, m-phenylenediamine (hereafter abbreviated as m-PDA) is preferably used in terms of availability and easiness of handling. Those multifunctional amines may be used alone, or two or more of them may be used together. In using two or more multifunctional amines together, two or more among the above-cited ones may be combined, or any of the above-cited ones and an amine having at least two secondary amino groups in one molecule thereof may be combined. Examples of an amine having at least two secondary amino groups in one molecule thereof include piperazine and 1,3-bispiperidylpropane.

The term "multifunctional acyl halide" as used herein refers to an acyl halide having at least two halogenated acyl groups in one molecule thereof. Examples of a trifunctional acyl halide include trimesoyl chloride, 1,3,5-cyclohexanetricarbonyl trichloride and 1,2,4-cyclobutanetricarbonyl trichloride, and examples of a bifunctional acyl halide include: aromatic bifunctional acyl chlorides such as biphenyldicarbonyl dichloride, azobenzenedicarbonyl dichloride, terephthaloyl chloride, isoterephthaloyl chloride and naphthalenedicarbonyl chloride; aliphatic bifunctional acyl chlorides such as adipoyl chloride and sebacoyl chloride; and alicyclic bifunctional acyl halides such as cyclopentanedicarbonyl dichloride, cyclohexanedicarbonyl dichloride and tetrahydrofurandicarbonyl dichloride. In view of reactivity with multifunctional amines, it is appropriate that the multifunctional acyl halide is a multifunctional acyl chloride. Further, in view of selective separability and heat resistance of a membrane, it is preferred that the multifunctional acyl chloride is a multifunctional aromatic acyl chloride having 2 to 4 chlorinated carbonyl groups in one molecule thereof. Among them, trimesoyl chloride is preferred from the viewpoints of availability and easiness of handling. Those multifunctional acyl halides may be used alone, or two or more of them may be used at the same time.

(1-2) Supporting Membrane

The supporting membrane in the present invention includes a substrate and a porous supporting layer provided on the substrate, has substantially no capability of separating ions and the like, and is provided for imparting strength to the separation functional layer which substantially has separation performance.

The thickness of a supporting membrane affects the strength of the composite semipermeable membrane and the filling density when the composite semipermeable membrane is made into a membrane element. In order to obtain sufficient mechanical strength and filling density, it is preferable that the thickness of the supporting membrane is in a range of 30 $\mu$m to 300 $\mu$m, preferably 50 $\mu$m to 250 $\mu$m.

Incidentally, the term "thickness" used for each layer or each membrane in this specification represents an average thickness value unless otherwise noted. Herein, the average value is an arithmetic average value. More specifically, the thickness of each layer or membrane is determined by observing the vertical section of each layer or membrane and calculating an average value of thicknesses measured at 20 points chosen at intervals of 20 $\mu$m in the direction orthogonal to the thickness direction of the layer or membrane (in the direction of the layer or membrane surface, in the horizontal direction).

The present inventors have focused attention on adhesion between a substrate and a porous supporting layer and made intensive studies on such adhesion. As a result, the present inventors have found that there were cases where, when a porous supporting layer having been impregnated with an aqueous solution high in salt concentration was brought into contact with an aqueous solution low in salt concentration, water flowed abruptly into the porous supporting layer due to the concentration difference as a driving force, partial delamination occurred between the substrate and the porous supporting layer to develop flaws in the membrane and cause reduction in salt removal ratio. In other words, if it becomes possible to increase the strength to peel a porous supporting layer away from a substrate, the resulting composite semipermeable membrane can retain a high salt removal ratio even if the supporting layer has come into contact with an aqueous solution high in salt concentration.

It is preferred that the adhesiveness between the substrate and the porous supporting layer, though it varies depending on the properties of a material used for the substrate, is equivalent to a peel strength of 1.1 N/25 mm or higher in a 180°-peel test. The upper limit of the peel strength, though it cannot be defined because there may be cases where it is beyond the destructive strength of a porous supporting layer, is generally lower than 7.5 N/25 mm as long as the porous supporting layer is actually peeled away. By adjusting the peel strength to be 1.1 N/25 mm or higher, it becomes possible for the composite semipermeable membrane to retain a high salt removal ratio even when there has occurred contact of an aqueous solution high in salt concentration with the supporting layer.

[Porous Supporting Layer]

In the invention, it is preferable that the porous supporting layer have a multilayer structure. The porous supporting layer of multilayer structure includes two layers, namely a first layer which comes into contact with the substrate and a second layer which comes into contact with the separation functional polyamide layer. The first layer is brought into close contact with the substrate, and ensures high peel strength. The second layer provides a polymerization field for the separation functional layer which substantially determines membrane performance, and/or directly gives mechanical strength to the separation functional layer. The strength to peel the porous supporting layer away from the substrate can be adjusted to an optimum value by controlling a micro-phase separation structure of the support, the volume fraction of a polymer by which the support is occupied, the strength of a material of a polymer, and so on. However, high-strength supports do not necessarily function as optimal supports for the separation functional layer. For example, a porous supporting layer high in volume fraction of a polymer forming the porous supporting layer has high peel strength, but owing to smallness of spaces for retaining an aqueous monomer solution, such a layer is unsuitable as the polymerization field. In addition, a porous supporting layer high in strength and excellent in affinity for a substrate has high peel strength as well, but depending on the material thereof, the case often occurs where such a layer does not have good adhesion to the separation functional polyamide layer. It is therefore preferable to provide functional isolation between the first layer which is responsible for peel strength and the second layer which functions as the polymerization field.

The first layer of the porous supporting layer according to the invention is required to be formed from a material high in strength, to ensure high peel strength through close contact with the substrate, to have excellent dimensional stability and cause neither delamination nor failure even when it is used in high-pressure filtration or the like, and to minimize resistance to transfer of permeate having passed through the separation functional layer. For the purpose of exerting high peel strength through close contact with the substrate, it is preferable that the material to be used in the first layer is a material high in affinity with the substrate. In the case of using a polyester polymer for the substrate, for example, it is possible to use a homopolymer or copolymer of polysulfone, polyether sulfone, polyamide, polyester, cellulose polymers, vinyl polymers, polyphenylene sulfide, polyphenylene sulfide sulfone, polyphenylene sulfone and polyphenylene oxide. These polymers can be used alone or as combinations of two or more thereof. The cellulose polymers usable herein are cellulose acetate, cellulose nitrate and the like, and the vinyl polymers usable herein are polyethylene, polypropylene, polyvinyl chloride, polyacrylonitrile and the like. Among the polymers recited above, it is preferable to use homopolymer or copolymer of polysulfone, polyamide, polyester, cellulose acetate, cellulose nitrate, polyvinyl chloride, polyacrylonitrile, polyphenylene sulfone, polyphenylene sulfide, polyphenylene sulfide sulfone and so on. Of these materials, polyacrylonitrile, cellulose acetate, polysulfone, polyphenylene sulfide sulfone or polyphenylene sulfone is preferred in view of their high chemical, mechanical and thermal stabilities and their excellent adhesiveness with the substrate.

A separation functional layer which delivers excellent fresh water generation performance is generally a thin membrane having a thickness of 100 nm or below, and inferior in mechanical strength. The second layer of the porous supporting layer according to the invention, which directly supports the separation functional layer, is required to have high flatness and ensure formation of asperity-free, uniform surface structure, to be free from strike-through of a membrane forming solution at the time of formation of the second layer and allow formation of a pin hole-free structure, to have good adhesion to the separation functional layer, to have excellent dimensional stability and cause neither delamination nor failure even when it is used in high-pressure filtration or the like, and further to allow retention and release of a monomer such as an amine as a polymerization field for the separation functional layer.

Examples of a material usable for the second layer include homopolymers, such as polysulfone, polyether sulfone, polyamide, polyester, cellulose polymers, vinyl polymers, polyphenylene sulfide, polyphenylene sulfide sulfone, polyphenylene sulfone and polyphenylene oxide, and copolymers of two or more thereof. These polymers can be used alone or as blends of any two or more thereof. The cellulose polymers usable herein are cellulose acetate, cellulose nitrate and the like, and the vinyl polymers usable herein are polyethylene, polypropylene, polyvinyl chloride, polyacrylonitrile and the like. Among the polymers recited above, especially suitable ones are homopolymers, such as polysulfone, polyamide, polyester, cellulose acetate, cellulose nitrate, polyvinyl chloride, polyacrylonitrile, polyphenylene sulfide, polyphenylene sulfide sulfone and polyphenylene sulfone, and copolymers of any two or more of the above-recited ones. More preferably, cellulose acetate, polysulfone, polyphenylene sulfide sulfone and polyphenylene sulfone may be mentioned. Of these materials, polysulfone is further preferred from the viewpoint of forming with ease such a structure capable of allowing retention and release of a monomer such an amine as a polymerization field for the separation functional layer.

In the case of using polysulfone as a material for the porous supporting layer, it is preferable that the polysulfone has weight average molecular weight (Mw) in a range of 10,000 to 200,000, preferably 15,000 to 100,000, as measured by gel permeation chromatography (GPC) using N-methylpyrrolidone as a developing solvent and polystyrene as a standard substance. By having Mw of 10,000 or higher, the polysulfone can ensure mechanical strength and heat resistance suitable as the porous supporting layer. In addition, by having Mw of 200,000 or lower, the polysulfone can have appropriate viscosity when it is dissolved in a solvent and can ensure good moldability.

A porous support can be formed e.g. by casting a solution prepared by dissolving the polysulfone in N,N-dimethylformamide (hereinafter abbreviated as DMF) into a layer having a uniform thickness on the substrate, and subjecting the cast solution to wet solidification in water. The porous supporting layer formed in this manner has a structure in which a plurality of micropores having a diameter of 1 to 30 nm are present at the surface thereof.

The thickness of the supporting membrane affects the strength of the composite semipermeable membrane and the filling density when the composite semipermeable membrane is made into a membrane element. In order to ensure sufficient mechanical strength and filling density, it is preferable that the supporting membrane has a thickness in a range of 30 $\mu$m to 300 $\mu$m, preferably 50 $\mu$m to 250 $\mu$m. On the other hand, the preferable thickness of the porous supporting layer is in a range of 10 $\mu$m to 200 $\mu$m, more preferably 20 $\mu$m to 100 $\mu$m, and that of the substrate is preferably in a range of 10 $\mu$m to 250 $\mu$m, more preferably 20 $\mu$m to 200 $\mu$m. Additionally, when the porous supporting layer is impregnated into the substrate, the thickness of the porous supporting layer includes the thickness of the impregnated portion. And the thickness of the substrate refers to the thickness of the substrate in its entirety, and it also includes the thickness of the impregnated portion when the porous supporting layer is impregnated into the substrate.

Additionally, the term "thickness" used for each layer and each membrane in this specification represents an average thickness value unless otherwise noted. Herein, the average value is an arithmetic average value. More specifically, each of the layer thickness and the membrane thickness is determined by observing a vertical section of each layer and that of each membrane and calculating an average value of thicknesses measured at 20 points chosen at intervals of 20 $\mu$m in the direction orthogonal to the thickness direction of each of the layer and the membrane (in the direction of the layer or membrane surface, in the horizontal direction).

In a microfiltration membrane and an ultrafiltration membrane, permeation resistance of the porous supporting layer is reduced by reducing the volume fraction of a polymer by which the porous supporting layer is occupied. Although it allows direct enhancement of separation membrane permeability, such a technique is different from the technique of the invention. When permeation resistance of a separation functional layer is sufficiently high as compared with that of the porous supporting layer as is the case in a reverse osmosis membrane, reduction in permeation resistance of the porous supporting layer often does not become a main factor directly contributing improvement in permeability of the composite semipermeable membrane. In the technique of the invention, high permeability can be achieved by increasing efficiency in feeding of monomer solutions from the porous supporting layer into the reaction field at the time of interfacial polymerization and actually forming a separation functional layer with a large surface area.

Further, in the porous supporting layer of the invention, it is preferable that the interface between the first layer and the second layer formed thereon are continuous in structure. The expression of "continuous in structure" used herein refers to such a structure that no skin layer is formed at the interface between the first layer and the second layer formed thereon. The term "skin layer" used herein refers to the portion having a high density. Specifically, fine pores in the skin layer surface are from 1 nm to 50 nm in size. When a skin layer is formed at the interface between the first layer and the second layer, high resistance develops in the porous supporting layer to result in a drastic drop in permeation flow rate

[Substrate]

Examples of a main component of the substrate for use in forming the supporting membrane include polyester-based polymers, polyamide-based polymers, polyolefin-based polymers, and mixtures and copolymers of these polymers. Among them, polyester-based polymers are preferable because they allow formation of supporting membranes superior in mechanical strength, heat resistance, water resistance and so on.

The term "polyester-based polymer" as used herein refers to a polyester including acids and alcohols

Examples of acids usable therein include aromatic carboxylic acids such as terephthalic acid, isophthalic acid and phthalic acid; aliphatic dicarboxylic acids such as adipic acid and sebacic acid; and alicyclic dicarboxylic acids such as cyclohexanedicarboxylic acid.

Examples of the alcohols usable therein include ethylene glycol, diethylene glycol and polyethylene glycol.

Additionally, the wording "containing polyester as a main component" is synonymous with the "containing a polyester-based polymer as a main component". The ratio between acids and alcohols constituting a polyester-based polymer has no particular limits so long as it is in a usually-used range.

Examples of the polyester-based polymer include polyethylene terephthalate resins, polybutylene terephthalate resins, polytrimethylene terephthalate resins, polyethylene naphthalate resins, polylactic acid resins and polybutylene succinate resins, and further include copolymers of these resins.

The substrate in the invention is a fabric-like material made from a polymer as recited above or the like. The fabric used for the substrate is preferably fabric made of fibers of a polymer as recited above or the like in view of strength and fluid permeability.

As to such a fabric, a long-fiber nonwoven fabric and a short-fiber nonwoven fabric are both suitable for use.

Particularly, when the long-fiber nonwoven fabric is used as the substrate, it delivers excellent permeability on the occasion of the flow-cast of a polymer solution for forming the porous supporting layer, thereby preventing the porous supporting layer from delaminating, the membrane from becoming uneven due to scuffing of the substrate or the like, and defects such as pin holes from generating. It is therefore especially preferable that the substrate is formed of long-fiber nonwoven fabric. Particularly, it is preferable that the long-fiber nonwoven fabric is a fabric made of thermoplastic continuous filaments.

As mentioned above, the substrate in the invention is preferably a long-fiber nonwoven fabric containing polyester as a main component thereof.

In view of moldability and strength, it is preferable for fibers of each of the long-fiber nonwoven fabric and the short-fiber nonwoven fabric to be longitudinally oriented more in the surface layer on the side opposite to the porous supporting layer side than in the surface layer on the porous supporting layer side. In other words, such a structure means that the degree of fiber orientation is lower in the surface layer on the side opposite to the porous supporting layer side than in the surface layer on the porous supporting layer side.

Having the foregoing structure is preferable because it allows retention of strength of the composite semipermeable membrane, thereby achieving high effect on prevention of membrane failure and the like.

More specifically, in each of the long-fiber nonwoven fabric and the short-fiber nonwoven fabric, the degree of fiber orientation in the surface layer on the side opposite to the porous supporting layer side is preferably from 0° to 25°. In addition, the difference in the degree of fiber orientation between the surface layer on the side opposite to the porous supporting layer side and that on the porous supporting layer side is preferably from 10° to 90°.

In a process of producing separation membranes and a process of producing membrane elements, heating steps are included. And there occurs a phenomenon in which the porous supporting layers or separation functional layers shrink when heated. This phenomenon is remarkable in the width direction in particular to which no tension is applied in continued membrane producing. The shrinkage causes a problem in dimensional stability or the like, and it is therefore preferred that the substrate is low in ratio of dimensional change by heat. Cases where the difference in degree of fiber orientation in nonwoven fabric between the surface layer on the side opposite to the porous supporting layer side and the surface layer on the porous supporting layer side is in a range of 10° to 90° are preferred because thermal changes in the width direction are also inhibited in such cases.

The term "degree of fiber orientation" used in this specification refers to the index indicating orientations of fibers in the case of using nonwoven fabric as the substrate. Specifically, the degree of fiber orientation is an average value of angles between the length directions of fibers constituting nonwoven fabric substrate and the membrane-forming direction in continued membrane producing, namely the length direction of nonwoven fabric substrate. More specifically, when the length directions of fibers are parallel to the membrane-forming direction, the degree of fiber orientation is 0°. On the other hand, when the length directions of fibers are orthogonal to the membrane-forming direction, namely parallel to the width direction of nonwoven fabric substrate, the degree of fiber orientation is 90°. Thus the degree of fiber orientation nearer to 0° indicates that the directions of fibers are the longitudinal orientation, and the degree of fiber orientation nearer to 90° indicates that the directions of fibers are the lateral orientation.

The degree of fiber orientation is determined in the following manner.

Firstly, 10 small specimens are randomly taken from a nonwoven fabric sample. Then, photographs of surfaces of the specimens are taken under a scanning electron microscope set at a magnification of 100 to 1,000. From the photographs taken, 10 fibers per specimen are chosen and an angle which each fiber makes with the length direction of nonwoven fabric is measured, with the length direction of nonwoven fabric (also referred to as the longitudinal direction, or the membrane-forming direction) being taken as 0°.

In other words, angle measurements are made on 100 fibers per nonwoven fabric sample. The average value of the angles thus measured on the 100 fibers is calculated. The value obtained by rounding off the thus calculated average value to the first decimal place is defined as the degree of fiber orientation.

It is preferable for the thickness of the substrate to be in a range of 10 μm to 250 μm, preferably 20 μm to 200 μm, in view of mechanical strength and filling density.

2. Production Method of Composite Semipermeable Membrane

Next a production method of the foregoing composite semipermeable membrane is illustrated. The production method includes a step of forming the supporting membrane and a step of forming the separation functional layer.

(2-1) Step of Forming Supporting Membrane

In a step of providing a porous supporting layer on the substrate may be included a step of applying the substrate with a polymer solution for forming the porous supporting layer, a step of impregnating the substrate with the polymer solution, and a step of immersing the substrate impregnated with the polymer solution into a coagulation bath filled with a solution lower in solubility of the polymer (hereafter referred simply to as a non-solvent) than good solvents for the polymer, thereby coagulating the polymer and forming a three-dimensional network structure of the polymer.

And the step of forming a supporting membrane may further include a step of preparing a polymer solution by dissolving the polymer as a component of the porous support into a good solvent for the polymer. As the good solvent, a solvent appropriate to the kind and molecular weight of the polymer is selected and used.

By controlling the step of impregnating the substrate with the polymer solution, the supporting membrane having a specified structure can be obtained. As examples of a method for controlling impregnation of the substrate with the polymer solution, mention may be made of a method of controlling the time between application of the polymer solution to the substrate and immersion of the polymer-applied substrate into a coagulation bath filled with a non-solvent and a method of adjusting the viscosity of the polymer solution by controlling the temperature or concentration of the polymer solution. These method can be used in combination.

In general the time elapsed between application of a solution of polymer which is a component of the porous supporting layer to the substrate and immersion of the polymer solution-applied substrate into a coagulation bath is preferably in a range of 0.1 second to 5 seconds. As long as the time that elapsed before the immersion into the coagulation bath is in such a range, the polymer solution is sufficiently impregnated into spaces among fibers of the substrate, and then solidified. Additionally, the range suitable as the time that elapsed before the immersion into the coagulation bath can be adjusted as appropriate by controlling the viscosity of the polymer solution used.

When a polymer solution A for forming the first layer contains polysulfone as a main component of the porous supporting layer, the concentration of the polysulfone in the polymer solution A (namely, the solid concentration a) is preferably 15% by weight or higher, more preferably 17% by weight or higher. In addition, the concentration of the polysulfone in the polymer solution A is preferably 30% by weight or lower, more preferably 25% by weight or lower. By adjusting the polymer concentration to be 15% by weight or higher, the required peel strength can be obtained. And by adjusting the polymer concentration to be 30% by weight or lower, a structure having permeability can be obtained.

When a polymer solution B also contains polysulfone as a main component thereof, the concentration of the polysulfone in the polymer solution B (namely, the solid concentration b) is preferably 12% by weight or higher, more preferably 13% by weight or higher. In addition, the concentration of polysulfone in the polymer solution B is preferably 20% by weight or lower, more preferably 17% by weight or lower. As long as the polysulfone concentration is in such a range, an aqueous amine solution can be efficiently supplied from fine pores formed by phase separation at the occasion of forming a separation functional polyamide layer.

When both the polymer solution A and the polymer solution B contain polysulfone as their respective main components, it is preferred that the polysulfone concentrations, namely solid concentrations a and b, preferably satisfy the relational expression $1.0<a/b<2.0$, more preferably the relational expression $1.2<a/b<1.6$. And from the viewpoint of ensuring compatibility between a supply of an aqueous amine solution from the porous supporting layer and peel strength, it is more preferred that, while falling within their preferable numerical ranges specified above individually, the solid concentrations a and b satisfy the above relational expression.

The appropriate temperature of each polymer solution at the time of application of the solution is generally in a range of 10°C to 60°C when the solution contains polysulfone. As long as the temperature is in this range, the polymer solutions cause no precipitation, and solutions containing polymers in organic solvents are impregnated sufficiently into spaces among fibers in the substrate and undergo solidification. As a result, an anchor effect is produced, and a supporting membrane is bonded firmly to the substrate. Thus the supporting membrane as intended by the invention can be obtained. The preferred temperature range of each polymer solution may be adjusted as appropriate according to the viscosity of the polymer solution used.

In forming the supporting membrane, it is preferred that the polymer solution B for forming the second layer is applied concurrently with applying the polymer solution A for forming the first layer on the substrate. In the case of providing a curing time after application of the polymer solution A, a skin layer high in density comes to be formed at the surface of the first layer formed by phase separation of the polymer solution A, and causes a substantial reduction in permeation flow rate. It is therefore important to concurrently apply the polymer solution B and the polymer solution A to an extent that the polymer solution A does not form a skin layer high in density through the phase separation. Specifically, the expression of "applied concurrently" is intended to include a situation that the polymer solution A comes into contact with the polymer solution B prior to arrival at the substrate, namely, a situation that the polymer solution B is already applied to the polymer solution A before the substrate is coated with the polymer solution A.

Application of polymer solutions to the substrate can be performed using various coating methods, but pre-metered coating methods which allow feeding of coating solutions in accurate amounts, such as a die coating method, a slide coating method and a curtain coating method are preferably adopted. In forming the porous supporting layer having a multilayer structure according to the invention, it is far preferred to adopt a double-slit die method by which a polymer solution for forming the first layer and a polymer solution for forming the second layer can be concurrently applied.

The polymer solution A for forming the first layer may be different in composition from the polymer solution B for forming the second layer. The expression of "different in composition" means that what is different is at least one among factors including the kind and solid concentration of a polymer incorporated, the kinds and concentrations of additives and the kind of a solvent used. The solvents used may be the same as or different from each other as long as they are good solvents for the polymers. Considering strength characteristics of the supporting membrane to be produced and impregnation of polymer solutions into the substrate, adjustments of polymers and solvents can be both made as appropriate in wider ranges.

The term "good solvent" as used in the invention refers to a solvent in which a polymeric material is dissolved. Examples of such a good solvent include N-methyl-2-pyrrolidone (hereafter abbreviated as NMP); tetrahydrofuran; dimethyl sulfoxide; amides such as tetramethylurea, dimethylacetamide and dimethylformamide; lower alkyl ketones such as acetone and methyl ethyl ketone; an ester and a lactone such as trimethyl phosphate and γ-butyrolactone, and mixtures thereof.

As non-solvents for the resins recited above, water is generally used, but any solvents may be used so long as polymers are not or hardly dissolved therein. Depending on the kinds of polymers used, usable non-solvents are water, aliphatic hydrocarbons, aromatic hydrocarbons, aliphatic alcohols and mixtures thereof, with examples including hexane, pentane, benzene, toluene, methanol, ethanol, trichloroethylene, ethylene glycol, diethylene glycol, triethylene glycol, propylene glycol, butylenes glycol, pentanediol, hexanediol and low molecular-weight polyethylene glycols.

For the coagulation bath, water is generally used, but a non-solvent may be used. The membrane form of the supporting membrane varies according to the composition of the bath, and therewith the formability of the composite membrane also varies. In addition, the temperature of the coagulation bath is preferably from -20°C to 100°C, more preferably from 10°C to 30°C. Temperature adjustment to be 100°C or lower allows reduction in amplitude of vibrations caused by thermal movements at the surface of the coagulation bath, and the porous supporting layer can be formed in a state of having a smooth membrane surface. Further, by adjusting the temperature to be - 20°C or higher, the coagulation speed can be kept relatively fast, and good membrane formability can be achieved.

Next the supporting membrane obtained under the foregoing conditions is washed with hot water in order to remove the solvent which was used in forming the membrane and has remained in the membrane formed. The temperature of the hot water used herein is preferably from 50°C to 100°C, more preferably from 60°C to 95°C. When the temperature is higher than such a range, shrinkage of the supporting membrane becomes great, and the permeability thereof is lowered. When the temperature is lower than the foregoing range contrary to the above case, the washing produces little effect on removal of the solvent remaining in the membrane.

Additionally, the polymer solution may contain additives as appropriate in order to control the pore size, porosity, affinity with water, elasticity modulus and so on of the supporting membrane. Examples of an additive for control of the pore size and the porosity include water; alcohols; water-soluble polymers such as polyethylene glycol, polyvinyl pyrrolidone, polyvinyl alcohol and polyacrylic acid, salts of such polymers; inorganic salts such as lithium chloride, sodium chloride, calcium chloride and lithium nitrate; formaldehyde; and formamide. However, the additives should not be construed as being limited to the above-recited ones.

Examples of an additive for control of the affinity with water and elasticity modulus include various surfactants.

Then, as one example of a step for forming the separation functional layer as a component of the composite semipermeable membrane, mention may be made of a step for forming a layer containing polyamide as the main component, and this step is explained below. The step for forming a separation functional polyamide layer includes a step of performing, on the supporting membrane surface, interfacial polycondensation using an aqueous solution containing a multifunctional amine as recited above and a water-immiscible organic solvent solution containing a multifunctional acyl halide as recited above, thereby forming a polyamide framework. The organic solvent solution and water are immiscible with each other.

In the multifunctional amine aqueous solution, the concentration of the multifunctional amine is preferably in a range of 0.1% to 20% by weight, more preferably in a range of 0.5% to 15% by weight. The multifunctional amine concentration in such a range allows attainment of sufficient permeability and removability of salts and boron. The multifunctional amine aqueous solution may contain a surfactant, an organic solvent, an alkaline compound, an antioxidant and the like unless these ingredients impede the reaction between the multifunctional amine and a multifunctional acyl halide. A surfactant has effects of enhancing the wettability of the supporting membrane surface and reducing interfacial tension between an aqueous amine solution and a non-polar solvent. There may be cases where an organic solvent acts as a catalyst in interfacial polycondensation reaction, and addition thereof pursues the interfacial polycondensation reaction with efficiency.

In order to perform the interfacial polycondensation on the supporting membrane, firstly, the multifunctional amine aqueous solution is brought into contact with the supporting membrane. It is preferable that the contact is made evenly and continuously on the supporting membrane surface. Examples of a method of making such a contact include a method of coating the supporting membrane with the multifunctional amine aqueous solution and a method of immersing the supporting membrane into the multifunctional amine aqueous solution. The time of contact between the supporting membrane and the multifunctional amine aqueous solution is preferably in a range of 5 seconds to 10 minutes, more preferably in a range of 10 seconds to 3 minutes.

After the multifunctional amine aqueous solution has been brought into contact with the supporting membrane, liquid removal is conducted so that no drops of the aqueous solution are left on the membrane surface. By conducting the liquid removal sufficiently, it becomes possible to prevent removal performance of the composite semipermeable membrane from degrading due to defects traceable to liquid drop-remaining spots generated after the formation of the composite semipermeable membrane. Examples of a liquid removal method usable herein include the method of allowing an excessive aqueous solution to flow down spontaneously by grasping the supporting membrane in a vertical position after contact with the multifunctional amine aqueous solution as disclosed e.g. in JP-A-2-78428, and a method of conducting liquid removal forcedly by spraying a current of nitrogen or the like from an air nozzle. After the liquid removal, it is also possible to carry out drying of the membrane surface and remove a portion of water of the aqueous solution.

Next a water-immiscible organic solvent solution containing a multifunctional acyl halide is brought into contact with the substrate which was put into contact with the multifunctional amine aqueous solution and has been conducted liquid removal, whereby interfacial polycondensation is induced to result in formation of a separation functional layer of cross-linked polyamide.

The concentration of a multifunctional acyl halide in the water-immiscible organic solvent solution is preferably in a range of 0.01% to 10% by weight, more preferably in a range of 0.02% to 2.0% by weight. The multifunctional acyl halide concentration of 0.01% by weight or higher can ensure sufficient reaction speeds, and those of 10% by weight or lower can prevent occurrence of side reactions.

It is preferred that the water-immiscible organic solvent is a solvent which a multifunctional acyl halide is dissolved in and causes no destruction of the supporting membrane, and it is essential only that the solvent is non-reactive with both the multifunctional amine compound and multifunctional acyl halide. Suitable examples of a water-immiscible organic solvent include hydrocarbon compounds such as hexane, heptanes, octane, nonane and decane.

As a method for bringing an organic solvent solution containing a multifunctional acyl halide into contact with the supporting membrane, the same method as used in applying the multifunctional amine aqueous solution to the supporting membrane may be adopted.

In the step of performing interfacial polycondensation according to the invention, it is important that the supporting membrane surface is sufficiently covered by a thin coating of cross-linked polyamide, and that the contacted water-immiscible organic solvent solution containing a multifunctional acyl halide is in a state of remaining on the supporting membrane. Therefore, the time for carrying out the interfacial polycondensation is preferably from 0.1 second to 3 minutes, more preferably from 0.1 second to 1 minute. By adjusting the time for carrying out the interfacial polycondensation to be from 0.1 second to 3 minutes, it becomes possible to sufficiently cover the supporting membrane surface with a thin coating of cross-linked polyamide and keep the organic solvent solution containing a multifunctional acyl halide on the supporting membrane.

After forming the separation functional polyamide layer on the supporting membrane through the interfacial polycondensation, liquid removal of an excess solvent is conducted. As a method of liquid removal of the excess solvent, for example, a method of removing an excess organic solvent by grasping the membrane in a vertical position and allowing the excess organic solvent to flow down spontaneously can be adopted. In this case, the time to grasp the membrane in a vertical position is preferably from 1 minute to 5 minutes, more preferably from 1 minute to 3 minutes. When the time is too short, the separation functional layer is not quite formed. On the other hand, when the time is too long, the organic solvent is unduly dried, whereby defects generate in the separation functional polyamide layer to cause degradation in membrane performance.

3. Use of Composite Semipermeable Membrane

The composite semipermeable membrane is suitably used as a spiral-type composite semipermeable membrane element which is formed by, together with a raw water spacer such as plastic net, a permeate spacer such as tricot and, if necessary, a film for enhancing pressure resistance, spirally winding the composite semipermeable membrane around a cylindrical water-collecting pipe perforated with a plurality of holes. Further, it is also possible to form a composite semipermeable membrane module by connecting this element in series or in parallel and loading them into a pressure vessel.

Further, the foregoing composite semipermeable membranes, elements or module can be integrated into fluid separation apparatus with a raw water feed pump, a unit for pre-treating the raw water and so on. By using such fluid separation apparatus, raw water is separated into permeate such as drinking water or the like and concentrate which has not been permeated through membranes, and water serving the intended purpose can be obtained.

When the operation pressure of the fluid separation apparatus is higher, the salt removal ratio is enhanced the more, but energy required for operations is increased the more. In addition to this, in view of durability of the composite semipermeable membrane, the preferable operation pressure at the time when water to be treated is made to permeate through the composite semipermeable membrane is from 1.0 MPa to 10 MPa. The salt removal ratio becomes worse as the temperature of feed water rises, but as the temperature of feed water decreases, so does the membrane permeation flux. Thus the suitable temperature of feed water is from 5°C to 45°C. In addition, the pH of feed water is preferably in a neutral range because, for cases where feed water is high in salt concentration as with sea water, high pH values cause a risk of generating scales of magnesium salts and the like (precipitates of slightly soluble substances), and besides, there is a concern that operations under high pH conditions causes membrane degradation.

Examples of raw water to be treated with the composite semipermeable membrane include liquid mixtures, such as seawater, brackish water and effluent, which each contain 500 mg/L to 100 g/L of TDS (Total Dissolved Solids). TDS refers to the content of total dissolved solids and is usually expressed in "mass/volume", but there are cases where TDS is expressed in "weight ratio" on the assumption that the weight of a one-litter of liquid mixture is 1 kg. According to the definition thereof, TDS can be calculated from the weight of matter remaining after a solution filtered through a 0.45-$\mu$m filter has been evaporated at temperatures ranging from 39.5°C to 40.5°C. In a simpler and easier way, however, TDS may be converted from practical salinity.

EXAMPLES

The invention will now be illustrated in more detail by reference to the following examples. However, the intention should not be construed as being limited to these examples in any way.

<Production of Semipermeable membrane>

(Example 1)

A DMF solution containing 25% by weight of polysulfone (a polymer solution A) and a DMF solution containing 17% by weight of polysulfone (a polymer solution B) were each prepared by mixing polysulfone and a DMF solution with 2-hour stirring at 90°C. The prepared polymer solutions were each cooled to room temperature, fed into different extruders independently, and then subjected to high-accuracy filtration. The thus filtrated polymer solutions were cast concurrently on nonwoven fabric made of polyethylene terephthalate fibers (fiber diameter: 1 decitex, thickness: about 90 $\mu$m, air permeability: 1 cc/cm$^2$/sec) via a double-slit die so as to form a 70 $\mu$m-thick layer of the polymer solution A and a 90 $\mu$m-thick layer of the polymer solution B, respectively. Immediately thereafter, the nonwoven fabric having the layers formed thereon was immersed in pure water and washed for 5 minutes, thereby obtaining a finely porous supporting membrane.

The finely porous supporting membrane thus obtained was immersed in an aqueous solution containing 4.0% by weight of m-PDA for 2 minutes, and then slowly raised from the solution while keeping the membrane surface in a vertical position. An excess of the m-PDA solution was removed from the surface of the supporting membrane by spraying nitrogen from an air nozzle on the membrane surface, and then a 25°C n-decane solution containing 0.12% by weight of trimesoyl chloride was applied so as to wet the whole membrane surface thoroughly. After the resulting supporting membrane was left standing for one minute, liquid removal of the membrane surface was conducted by keeping it in a vertical position for one minute to remove an excess of the n-decane solution. The supporting membrane thus treated was washed with water at 45°C for 2 minutes, and a membrane having a separation functional layer formed on the supporting membrane was obtained.

(Example 2)

A composite semipermeable membrane in Example 2 was produced in the same manner as in Example 1, except that a DMF solution containing 20% by weight of polysulfone was used as the polymer solution A and a DMF solution containing 15% by weight of polylsulfone was used as the polymer solution B.

(Example 3)

A composite semipermeable membrane in Example 3 was produced in the same manner as in Example 1, except that a DMF solution containing 18% by weight of polysulfone was used as the polymer solution A and a DMF solution containing 13% by weight of polylsulfone was used as the polymer solution B.

(Example 4)

A composite semipermeable membrane in Example 4 was produced in the same manner as in Example 1, except that a NMP solution containing 17% by weight of polysulfone was used as the polymer solution A and a DMF solution containing 16% by weight of polylsulfone was used as the polymer solution B.

(Example 5)

A composite semipermeable membrane in Example 5 was produced in the same manner as in Example 1, except that a DMF solution containing 21% by weight of polysulfone was used as the polymer solution A and a DMF solution containing 20% by weight of polylsulfone was used as the polymer solution B.

(Example 6)

A composite semipermeable membrane in Example 6 was produced in the same manner as in Example 1, except that a DMF solution containing 20% by weight of polysulfone was used as the polymer solution A and a DMF solution containing 12% by weight of polylsulfone was used as the polymer solution B.

(Example 7)

A composite semipermeable membrane in Example 7 was produced in the same manner as in Example 1, except that a DMF solution containing 20% by weight of polysulfone was used as the polymer solution A and a DMF solution containing 22% by weight of polylsulfone was used as the polymer solution B.

(Example 8)

A composite semipermeable membrane in Example 8 was produced in the same manner as in Example 1, except that a DMF solution containing 31% by weight of polysulfone was used as the polymer solution A and a DMF solution containing 20% by weight of polylsulfone was used as the polymer solution B.

(Example 9)

A composite semipermeable membrane in Example 9 was produced in the same manner as in Example 1, except that a DMF solution containing 20% by weight of polysulfone was used as the polymer solution A and a DMF solution containing 20% by weight of polylsulfone was used as the polymer solution B.

(Example 10)

In Example 1, a DMF solution containing 20% by weight of polysulfone was used for a polymer solution A and a DMF solution containing 15% by weight of polysulfone was used for a polymer solution B. The polymer solution A was cast into a 70 $\mu$m-thick layer by using a single-slit die, and immediately immersed into pure water and washed for 5 minutes. Subsequently thereto, water on the surface of the thus formed porous supporting layer was removed. Then, the polymer solution B was cast into a 90 $\mu$m-thick layer, and immediately immersed into pure water and washed for 5 minutes, thereby obtaining a finely porous supporting membrane. A composite semipermeable membrane in Example 10 was produced in the same manner as in Example 1, except for the conditions described above.

(Example 11)

A composite semipermeable membrane in Example 11 was produced in the same manner as in Example 1, except that a DMF solution containing 17% by weight of cellulose acetate was used as the polymer solution A and a DMF solution containing 20% by weight of polylsulfone was used as the polymer solution B.

(Example 12)

A composite semipermeable membrane in Example 12 was produced in the same manner as in Example 1, except that a DMF solution containing 17% by weight of polyacrylonitrile was used as the polymer solution A and a DMF solution containing 20% by weight of polylsulfone was used as the polymer solution B.

(Example 13)

A composite semipermeable membrane in Example 13 was produced in the same manner as in Example 1, except that a DMF solution containing 15% by weight of polyacrylonitrile was used as the polymer solution A and a DMF solution containing 20% by weight of polylsulfone was used as the polymer solution B.

(Example 14)

A composite semipermeable membrane in Example 14 was produced in the same manner as in Example 1, except that a DMF solution containing 17% by weight of polyphenylene sulfide sulfone was used as the polymer solution A and a DMF solution containing 20% by weight of polysulfone was used as the polymer solution B.

(Comparative Example 1)

A supporting membrane was produced by the same process as in Example 1, except that a 220 $\mu$m-thick coat of DMF solution containing 15% by weight of polysulfone alone was applied to the nonwoven fabric by using a single-slit die coater, not via the double-slit die.
On the thus produced supporting membrane, a separation functional layer was formed by the same process as in Example 1.

(Comparative Example 2)

A composite semipermeable membrane in Comparative Example 2 was produced in the same manner as in Comparative Example 1, except that a DMF solution containing 17% by weight of polysulfone was used as the polymer solution.

(Comparative Example 3)

A composite semipermeable membrane in Comparative Example 3 was produced in the same manner as in Example 1, except that a DMF solution containing 13% by weight of polysulfone was used as the polymer solution A and a DMF solution containing 20% by weight of polysulfone was used as the polymer solution B.

(Comparative Example 4)

A composite semipermeable membrane in Comparative Example 4 was produced in the same manner as in Comparative Example 1, except that a DMF solution containing 17% by weight of cellulose acetate was used as the polymer solution.

(Comparative Example 5)

A composite semipermeable membrane in Comparative Example 5 was produced in the same manner as in Comparative Example 1, except that a DMF solution containing 17% by weight of polyacrylonitrile was used as the polymer solution.

<Peeling Resistance Measurement>

Peeling resistance of the composite semipermeable membrane produced in each Example or each Comparative Example was measured with a testing machine TENSILON (RTG-1210, manufactured by A&D Corporation Limited). On a new membrane sample which no pressure had been applied to and no water had passed through, a peel test was carried out under conditions that the temperature during the test was 25°C, the grip travelling speed was 10 mm/min and the direction of peel was 180°, thereby determining the maximum value of peel force. This operation was performed on 10 test specimens of each sample, and the average of the values obtained was calculated, thereby determining the peel strength.

<Salt Removal Ratio (TDS Removal Ratio)>

Filtration treatment for 24 hours was conducted by feeding seawater (which corresponds to feed water) having a temperature of 25°C and a pH of 6.5 to a composite semipermeable membrane under an operational pressure of 5.5 MPa. The thus obtained permeate was used for TDS removal ratio measurement.
Electrical conductivity of the feed water and that of the permeate were measured with an electrical conductivity meter manufactured by DKK-TOA CORPORATION, whereby practical salinities were determined. A calibration curve was prepared by carrying out ion conductivity measurements on aqueous solutions with known NaCl concentrations. By the use of this calibration curve, the TDS concentration was calculated from the value of ion conductivity measured above, and the salt removal ratio, namely the TDS removal ratio, was determined by the following expression:

$$\text{TDS removal ratio (\%)} = 100 \times \{1-(\text{TDS concentration in permeate/TDS concentration in feed water})\}$$

<Membrane Permeation Flux>

The amount (cubic meter) of permeate per one day and per square meter in apparent area of membrane surface under the 24-hour water treatment operation was defined as membrane permeation flux ($m^3/m^2$/day).

<High Salt Concentration Aqueous Solution-Pure Water Contact Test>

Samples were prepared by immersing composite semipermeable membranes in an aqueous solution having a NaCl concentration of 10% by weight and a pH of 6.5 at 25°C for one day, further immersing in pure water for 6 hours, and repeating this immersion treatment 10 times. The salt removal ratio and membrane permeation flux of each of the thus prepared samples were determined by the foregoing methods, respectively.

Results obtained by the foregoing measurements are shown in Table 1. As can be seen from Table 1, the composite semipermeable membranes produced in accordance with the invention suffered only minor changes in salt removal performance even after their respective supporting membranes had been brought into contact with a high salt concentration aqueous solution.

EP 2 821 126 A1

Table 1

| | Polymer Solution | | | | | | | Application Method | Substrate-Supporting Layer Peel Strength (N/25mm) | Composite Semipermeable Membrane Performance (initial performance) | | Composite Semipermeable Membrane Performance (after contact between high-salt aqueous solution and pure water) | | |
|---|---|---|---|---|---|---|---|---|---|---|---|---|---|---|
| | First Layer (polymer solution A) | | | Second Layer (polymer solution B) | | | | | | Salt Removal Ratio (%) | Permeation Flux $(m^3/m^2/day)$ | Salt Removal Ratio (%) | Permeation Flux $(m^3/m^2/day)$ | Change in Salt Removal Ratio (%) |
| | Sol-vent | Polymer | % | Sol-vent | polymer | % | a/b | | | | | | | |
| Example 1 | DMF | Polysulfone | 25 | DMF | Polysulfone | 17 | 1.5 | Concurrent | 2.48 | 99.80 | 0.80 | 99.79 | 0.82 | 0.01 |
| Example 2 | DMF | Polysulfone | 20 | DMF | Polysulfone | 15 | 1.3 | Concurrent | 1.53 | 99.75 | 1.00 | 99.73 | 1.05 | 0.02 |
| Example 3 | DMF | Polysulfone | 18 | DMF | Polysulfone | 13 | 1.4 | Concurrent | 1.15 | 99.70 | 0.95 | 99.67 | 1.01 | 0.03 |
| Example 4 | NMP | Polysulfone | 17 | DMF | Polysulfone | 16 | 1.1 | Concurrent | 1.22 | 99.78 | 0.83 | 99.75 | 0.89 | 0.03 |
| Example 5 | DMF | Polysulfone | 21 | DMF | Polysulfone | 20 | 1.1 | Concurrent | 1.68 | 99.82 | 0.89 | 99.80 | 0.93 | 0.02 |
| Example 6 | DMF | Polysulfone | 20 | DMF | Polysulfone | 12 | 1.7 | Concurrent | 1.57 | 99.10 | 0.97 | 99.08 | 1.02 | 0.02 |
| Example 7 | DMF | Polysulfone | 20 | DMF | Polysulfone | 22 | 0.9 | Concurrent | 1.59 | 99.76 | 0.75 | 99.74 | 0.79 | 0.02 |
| Example 8 | DMF | Polysulfone | 31 | DMF | Polysulfone | 20 | 1.6 | Concurrent | 3.30 | 98.50 | 0.60 | 98.50 | 0.59 | 0.00 |
| Example 9 | DMF | Polysulfone | 20 | DMF | Polysulfone | 20 | 1.0 | Concurrent | 1.56 | 99.80 | 0.81 | 99.78 | 0.86 | 0.02 |
| Example 10 | DMF | Polysulfone | 20 | DMF | Polysulfone | 15 | 1.3 | Sequential | 1.52 | 98.90 | 0.73 | 98.88 | 0.78 | 0.02 |

Table 1(continued)

| | Polymer Solution | | | | | | Application Method | Substrate-Supporting Layer Peel Strength (N/25mm) | Composite Semipermeable Membrane Performance (initial performance) | | Composite Semipermeable Membrane Performance (after contact between high-salt aqueous solution and pure water) | | |
|---|---|---|---|---|---|---|---|---|---|---|---|---|---|
| | First Layer (polymer solution A) | | | Second Layer (polymer solution B) | | | | | Salt Removal Ratio (%) | Permeation Flux $(m^3/m^2/day)$ | Salt Removal Ratio (%) | Permeation Flux $(m^3/m^2/day)$ | Change in Salt Removal Ratio (%) |
| | Sol-vent | Polymer | % | Sol-vent | polymer | % | a/b | | | | | | | |
| Example 11 | DMF | Cellulose acetate | 17 | DMF | Polysulfone | 20 | 0.9 | Concurrent | 1.22 | 99.83 | 0.91 | 99.80 | 0.97 | 0.03 |
| Example 12 | DMF | Polyacrylonitrile | 17 | DMF | Polysulfone | 20 | 0.9 | Concurrent | 1.55 | 99.71 | 1.00 | 99.69 | 1.05 | 0.02 |
| Example 13 | DMF | Polyacrylonitrile | 15 | DMF | Polysulfone | 20 | 0.8 | Concurrent | 1.23 | 99.62 | 1.05 | 99.59 | 1.11 | 0.03 |
| Example 14 | DMF | Polyphenylene sulfide sulfone | 17 | DMF | Polysulfone | 20 | 0.9 | Concurrent | 1.15 | 99.74 | 0.94 | 99.71 | 1.00 | 0.03 |
| Comp. Ex. 1 | DMF | Polysulfone | 15 | - | - | - | - | - | 0.68 | 99.70 | 1.05 | 99.59 | 1.20 | 0.11 |
| Comp. Ex. 2 | DMF | Polysulfone | 17 | - | - | - | - | - | 1.01 | 99.82 | 0.85 | 99.75 | 0.98 | 0.07 |
| Comp. Ex. 3 | DMF | Polysulfone | 13 | DMF | Polysulfone | 20 | 0.65 | Concurrent | 0.26 | 99.86 | 1.20 | 99.69 | 1.38 | 0.17 |
| Comp. Ex. 4 | DMF | Cellulose acetate | 17 | - | - | - | - | - | 0.64 | 68.80 | 0.64 | 68.68 | 0.79 | 0.12 |
| Comp. Ex. 5 | DMF | Polyacrylonitrile | 17 | - | - | - | - | - | 0.42 | 99.80 | 0.42 | 99.65 | 0.59 | 0.15 |

While the invention has been described in detail and with reference to specific embodiments thereof, it will be apparent to one skilled in the art that various changes and modifications can be made without departing from the spirit and scope of the invention.

This specification is based on Japanese Patent Application No. 2012-042964 filed on February 29, 2012 and Japanese Patent Application No. 2012-212629 filed on September 26, 2012, the contents of which are incorporated herein by reference.

INDUSTRIAL APPLICABILITY

The composite semipermeable membrane of the present invention can be used suitably in desalinating brackish water or seawater in particular.

## Claims

1.  A composite semipermeable membrane comprising: a supporting membrane which comprises a substrate and a porous supporting layer; and a separation functional layer provided on the porous supporting layer,
    wherein the porous supporting layer comprises a first layer on a substrate side and a second layer formed on the first layer, and has a peel strength of 1.1 N/25mm or higher, which is an average value of values obtained by 10-times measurement of a maximum value of a peel force when the porous supporting layer is peeled away from the substrate using a tensile testing machine TENSILON at a temperature of 25°C, at a peel speed of 10 mm/min and in a peel direction of 180°.

2.  The composite semipermeable membrane according to claim 1, wherein an interface between the first layer and the second layer is continuous in structure.

3.  The composite semipermeable membrane according to claim 2, wherein the porous supporting layer is formed by applying concurrently a polymer solution A for forming the first layer on the substrate and a polymer solution B for forming the second layer, followed by bringing into contact with a coagulation bath to cause phase separation.

4.  The composite semipermeable membrane according to claim 3, wherein the polymer solution A and the polymer solution B are different in composition.

5.  The composite semipermeable membrane according to claim 4, wherein a solid concentration a (% by weight) of the polymer solution A and a solid concentration b (% by weight) of the polymer solution B satisfy the following relational expressions: $1.0 < a/b < 2.0$, $15 \leq a \leq 30$ and $12 \leq b \leq 20$.

6.  The composite semipermeable membrane according to any one of claims 1 to 5, wherein the substrate is a long-fiber nonwoven fabric containing polyester as a main component.

## INTERNATIONAL SEARCH REPORT

| International application No. |
| --- |
| PCT/JP2013/055526 |

A. CLASSIFICATION OF SUBJECT MATTER
*B01D69/12*(2006.01)i, *B01D69/02*(2006.01)i, *B01D69/10*(2006.01)i, *B01D71/48*
(2006.01)i

According to International Patent Classification (IPC) or to both national classification and IPC

B. FIELDS SEARCHED

Minimum documentation searched (classification system followed by classification symbols)
B01D69/12, B01D69/02, B01D69/10, B01D71/48

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2001-252541 A  (Toray Industries, Inc.), 18 September 2001 (18.09.2001), claims; paragraphs [0013] to [0043]; fig. 1 (Family: none) | 1-6 |
| A | JP 2007-275691 A  (Toray Industries, Inc.), 25 October 2007 (25.10.2007), paragraphs [0027], [0034], [0036] (Family: none) | 1 |
| A | JP 2003-534408 A  (Millipore Corp.), 18 November 2003 (18.11.2003), claims; paragraphs [0041], [0051]; examples 4, 7, 8 & US 2003/0217965 A1     & EP 1284812 A & WO 2001/089673 A2     & DE 60132197 D | 3-5 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 April, 2013 (08.04.13) | 16 April, 2013 (16.04.13) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| | International application No. |
|---|---|
| | PCT/JP2013/055526 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-233666 A  (Toray Industries, Inc.),<br>15 October 2009 (15.10.2009),<br>entire text; all drawings<br>& US 2005/0087070 A1    & EP 1462154 A1<br>& WO 2003/049843 A1     & DE 60231332 D<br>& CN 1602225 A | 1-6 |
| A | JP 2007-182067 A  (Toray Industries, Inc.),<br>19 July 2007 (19.07.2007),<br>entire text<br>(Family: none) | 1-6 |
| A | JP 2005-516754 A  (Cuno, Inc.),<br>09 June 2005 (09.06.2005),<br>entire text; all drawings<br>& US 2002/0113006 A1    & EP 1307280 A<br>& WO 2002/011868 A1     & DE 60115250 D<br>& CN 1627983 A | 1-6 |

Form PCT/ISA/210 (continuation of second sheet) (July 2009)

**EP 2 821 126 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55014706 A
- JP 5076740 A
- JP 2078428 A
- JP 2012042964 A
- JP 2012212629 A